# EUROPÄISCHE PATENTANMELDUNG

(11) **EP 0 637 091 A1**
(43) Veröffentlichungstag der Anmeldung: **01.02.1995**
(21) Anmeldenummer: 94110698.1
(22) Anmeldetag: 09.07.1994
(51) Int. Cl.: H01M 8/24

(54) **Verschalten von Brennstoffzellen**

(30) Priorität: 24.07.1993 DE 4324907
(71) Anmelder: DORNIER GmbH, D-88039 Friedrichshafen (DE)
(72) Erfinder: Späh, Richard, Dr.rer.nat., D-88662 überlingen (DE); Westphal, Manfred, Ing., D-88697 Bermatingen (DE); Erdle, Erich, Dr.rer.nat., D-88090 Immenstaad (DE); Zurell, Klaus-Peter, Dipl.-Ing., D-88045 Friedrichshafen (DE)
(74) Vertreter: Landsmann, Ralf, Dipl.-Ing.

(57) **Zusammenfassung**

Bauweise für eine serielle Anordnung von Brennstoffzellenblöcken (1) zur Stromerzeugung in Großanlagen, wobei die Blöcken (1) in beliebiger Anzahl zu Moduleinheiten (9) seriell verschaltet sind.

## Beschreibung

Die Erfindung betrifft eine Bauweise zur seriellen Anordnung von einzelnen Brennstoffzellen mit dem Ziel der Realisierung von Großanlagen zur Stromerzeugung.

Die Brennstoffzellen sind Energiewandler, die aus der chemischen Energie von Reaktanden (Brenngas und Oxidationsmittel) direkt, d. h. ohne den Umweg über einen thermodynamischen Kreisprozeß, elektrische Energie (Gleichstrom bei niedriger Spannung) erzeugen. Im Unterschied zu Akkumulatoren sind bei den Brennstoffzellen die Reaktanden nicht integrale Bestandteile des Systems, die sich in Betrieb allmählich erschöpfen, sondern werden hier kontinuierlich zugeführt, wobei die Brennstoffzelle lediglich die Wandlerfunktion übernimmt.

Da bei der Brennstoffzelle die elektrochemischen Vorgänge an der Oberfläche und nicht im Volumen ablaufen, müssen zur Darstellung technischer Einheiten viele Einzelzellen zu einem größeren Block integriert werden. Deshalb werden weltweit vermehrt Anstrengungen unternommen, die Brennstoffzellen in platzsparender Flachbauweise zu entwickeln, die aufgrund höherer Leistungsdichte und fertigungstechnischer Vorteile deutlich günstigere Investitionskosten ermöglichen. Diese Blöcke können leicht zu größeren Anlagen mit höherer Leistung zusammengefaßt werden.

Die Betriebstemperaturen der Brennstoffzelle sind abhängig von den verwendeten Materialien für die Zellen und liegen zwischen 50°C (Niedertemperatur) und 1000°C (Hochtemperatur). Gegenüber den Niedertemperaturzellen hat die Hochtemperaturzelle eine Reihe von Vorteilen. Neben einen höheren Wirkungsgrad bei der Stromerzeugung Können die Hochtemperaturzellen z. B. auch für den Umkehrprozeß der Hochtemperatur-Elektrolyse verwendet werden. Hier kann Wasserstoff aus Wasserdampf bei ca. 800 - 1000°C mit hohem Wirkungsgrad gewonnen werden. Deshalb wird bei der gestellten Aufgabe bevorzugt von Hochtemperaturzellen ausgegangen. Jedoch soll die Bauweise auch für Niedertemperaturzellen geeignet sein.

Aus der US-Patentschrift 4,476,196 ist eine Anordnung bekannt, bei der ein quaderförmiger Brennstoffzellenblock mit vier Gasanschlußelementen (Manifolds), die mittels keramischer Paste am Block fixiert sind, in einem Gehäuse gelagert ist, wobei eine elastische Isolierung den Block vom Gehäuse mechanisch entkoppelt und thermisch isoliert. Nachteilig bei dieser Lösung sind die vier Manifolds (jeweils zwei für das Brenngas und zwei für das Oxida tionsgas), welche einen hohen Aufwand an Gasführungsstrukturen erfordern und das Versagungsrisiko erhöhen. Diese Lösung mag für den Laborbetrieb oder den Betrieb von nur wenigen Einheiten akzeptabel sein, ist jedoch bei serieller Anordnung mit vielen Einheiten und größerer Leistung aufgrund des hohen Aufwandes und Platzbedarfes nicht sinnvoll.

Aufgabe der Erfinung ist es deshalb eine Bauweise zu entwickeln, die eine hohe Packungsdichte der Blöcke zuläßt und den Aufwand an Gasführungsstrukturen reduziert. Dabei soll die Austauschbarkeit der Blöcke, sowie die Wartung und Kontrolle der einzelnen Elemente jederzeit möglich sein bei geringen Kosten und hoher Zuverlässigkeit.

Erfindungsgemäß sind zur Lösung der gestellten Aufgabe die kennzeichnenden Merkmale von Anspruch 1 vorgesehen. Vorteilhafte Ausgestaltungen ergeben sich aus den Unteransprüchen.

Der Vorteil der Erfindung besteht darin, daß nur das Brenngas mittels spezieller Rohrleitungen und Anschlußelemente 2, 3 dem Block zugeführt wird. Das Oxidationsgas (z. B. Luft) dagegen benötigt diese Gasführung nicht, da hier die Gasströmung aufgrund der äußeren Druckdifferenz zwischen Vorderseite und Rückseite des Brennstoffzellenblockes 1 generiert wird. Hier ist gegenüber der bekannten US-Lösung besonders vorteilhaft, daß eine Serie von Brennstoffzellenblöcke 1 auf eine Trägerplatte 11 mit integrierten Brenngaskanälen derart montiert werden kann, daß diese Einheit als fertiger getesteter und funktionsfähiger Modul 10 in einen Behälter 16 integriert wird, welcher so gestaltet ist, daß die Luft ohne zusätzliche Gasführungsstrukturen und nur aufgrund der Druckdifferenz zwischen Vorder- und Rückseite durch die Brennstoffzellenelemente strömt.

Prinzipiell sind bei der Lösung eine hohe Anzahl von Blöcken 1 (z. B. 12 wie gezeichnet) auf einer ebenen Trägerplatte 11 montiert, wobei die Brenngaskanäle 13 möglichst weitgehend integraler Bestandteil der Trägerplatte 11 sind, um diese entsprechend den Anforderungen zu versteifen. Die unmittelbare Zuführung des Brenngases in die Blöcke 1 geschieht über spezielle, zusätzlich von außen montierte Rohrstücke 15. Die Luft dagegen benötigt keine gesonderte Leitung, da die Blöcke 1 mit der Trägerplatte 11 dicht abschließen und aufgrund der Druckdifferenz zwischen Vorderseite und Rückseite der Blöcke 1 das Gas automatisch durch die entsprechenden Kanäle der Brennstoffzellen strömt. Zur Erzeugung der Druckdifferenz wird die Trägerplatte 11 in einen gasdichten Behälter 16 geschoben, der entsprechende Kammern für die Zu- und Abführung des Gases enthält und eine Unterströmung der Trägerplatte 11 mittels Dichtleisten verhindert.

Die Ausführung ist folgend beschrieben und durch Skizzen erläutert. Es zeigen
- Fig. 1: schematisiert den prinzipiellen Aufbau eines Brennstoffzellenblockes 1
- Fig. 2: schematisiert und explodiert den Aufbau einer Moduleinheit 9
- Fig. 3: perspektivisch einen gesamten Brennstoffzellenmodul 10 mit Behälter 16
- Fig. 4: perspektivisch ein Detail der Montage zweier benachbarter Moduleinheiten 9
- Fig. 5: schematisiert die Anordnung der Isolierungen 23, 24 im Behälter
- Fig. 6: perspektivisch die serielle Anordnung von mehreren Brennstoffzellenmoduln 10
- Fig. 7: schematisiert die serielle Anordnung von Moduleinheiten 9 in einer zum Vieleck 29 geformten Trägerplatte
- Fig. 8: schematisiert die serielle Anordnung von übereinandergestapelten Moduleinheiten in einer zur Röhre 31 geformten Trägerplatte.

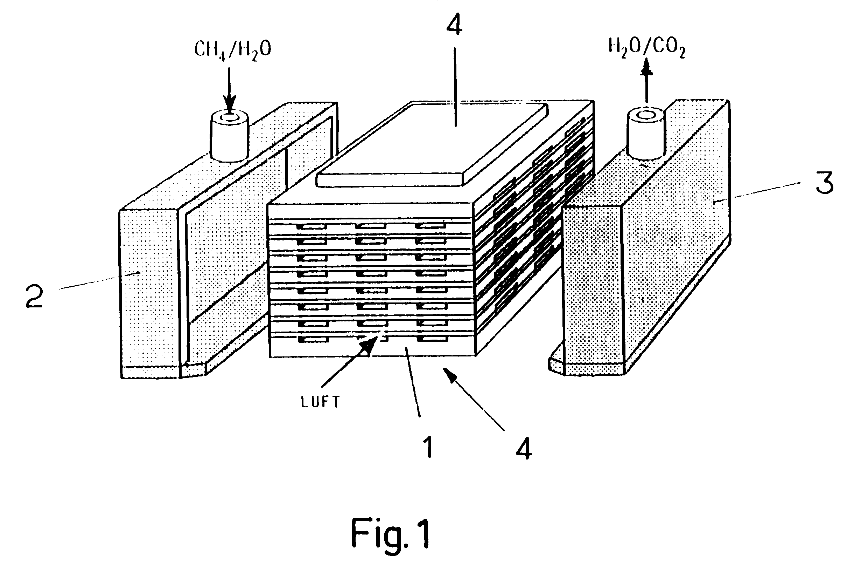

Fig. 1 zeigt den prinzipiellen Aufbau eines Brennstoffzellenblockes 1 mit vielen seriell übereinander gestapelten einzelnen Brennstoffzellen mit Verbindungs- und Gasführungselementen. Die zur Funktion notwendige äußere Gaszuführung geschieht beim Brenngas mittels zweier Anschlußelemente 2, 3, die an die jeweilige Stirnseite der Blöcke 1 gasdicht angeschlossen sind. Hierbei durchströmt das Brenngas den Block 1 von links nach rechts. Die Luft dagegen, welche den Block 1 von vorne nach hinten durchströmt, benötigt keine Anschlußelemente. Auf der Oberseite und Unterseite des Blockes 1 befinden sich je eine Stromanschlußlasche 4, welche die elektrische Verbindung zum nächsten Block 1 herstellt.

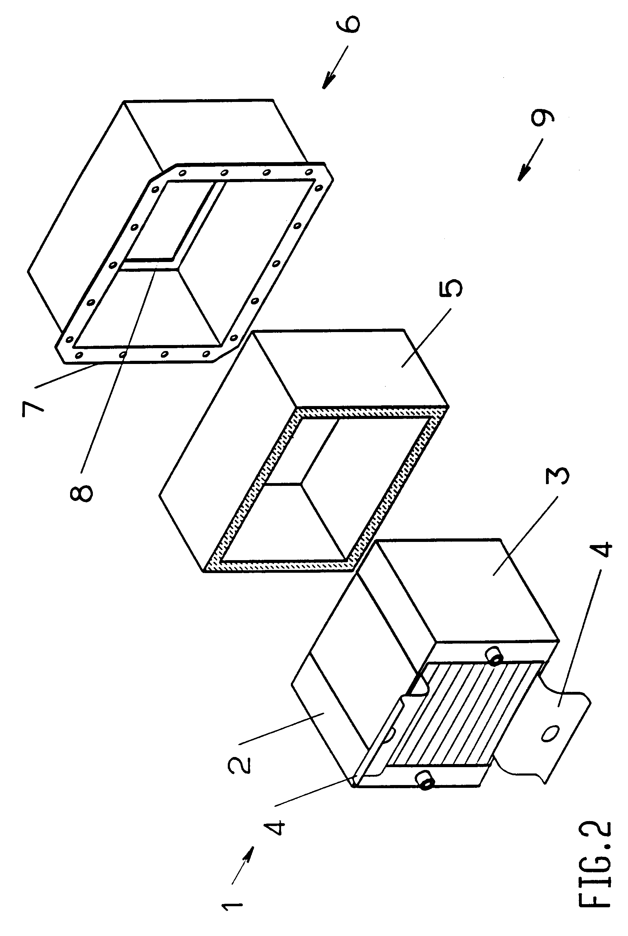

Fig. 2 zeigt diesen so aufgebauten Block 1 mit einer Isolierung 5 und einem Gehäuse 6. Ähnlich dem aufgeführten US- Patent wird auch hier der Block 1 in einem Gehäuse 6 und einer dazwischenliegenden Isolierung 5 gelagert. Die Isolierung dient einerseits zur thermischen Entkopplung von Block 1 und Gehäuse 6 und andererseits als Dichtung, um eine unzulässige Umströmung des Blockes 1 mit Luft zu vermeiden. Weiterhin dient die Isolierung zur Fixierung des Blockes 1 im Gehäuse 6, damit die Elastizität des Isoliermaterials die entstehenden unterschiedlichen Thermalverformungen zwischen Block 1 und Gehäuse 6 ausgleicht. Die Fixierung der drei Elemente geschieht mittels eines speziellen Hochtemperaturklebers. Je nach Zweckmäßigkeit können aber auch mehrere Brennstoffzellenblöcke 1 direkt aufeinandergestapelt werden, ohne daß jeder Block einzeln fixiert wird. Hierbei umschließt die elastische Isolierung 5 und das Gehäuse 6 den gesamten Stapel der Blöcke 1.

Das Gehäuse 6 weist zwei Flansche 7, 8 auf, wobei der vordere Flansch 7 zur Fixierung der Moduleinheit 9 an der Trägerplatte 11 dient und der hintere Flansch 8 als Anschlag wirkt, um ein Herausdrücken des Blockes 1 nach hinten zu vermeiden.

Diese Moduleinheit 9 ist das Basiselement, welches seriell addiert wird, um größere Einheiten mit höherer Leistung zu erzeugen.

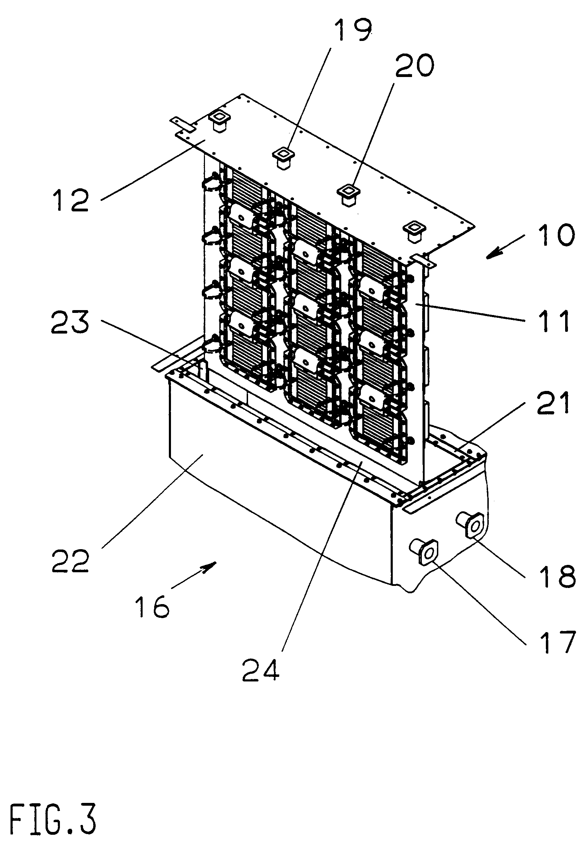

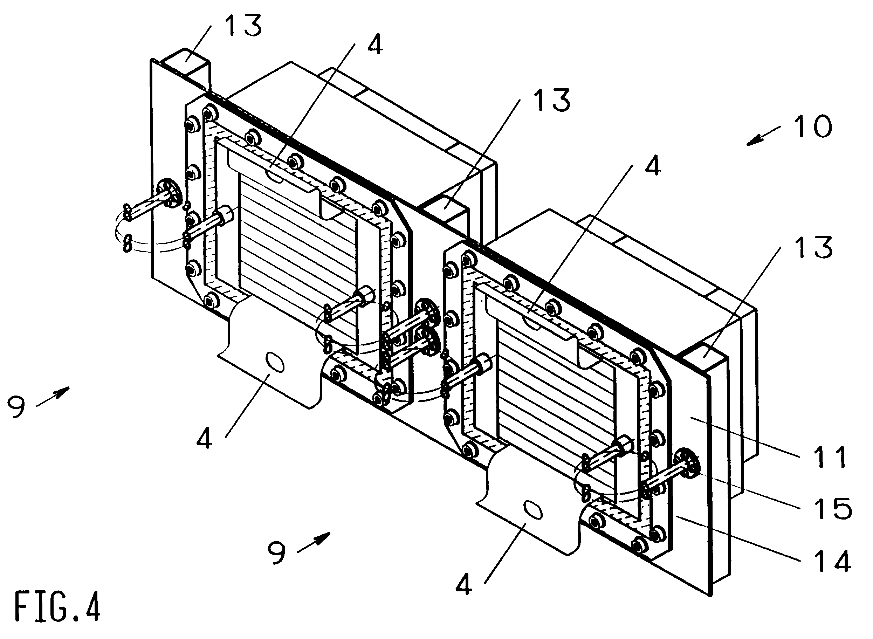

Fig. 3 zeigt eine solche größere Einheit mit 12 seriell zusammengeführten Moduleinheiten 9. Fig. 4 zeigt ein Detail aus Fig. 3 mit zwei montierten Moduleinheiten 9.

Dieser größere Brennstoffzellenmodul 10 ist T-förmig gestaltet und besteht aus einer vertikalen Trägerplatte 11 mit entsprechenden Aussparungen und Gewindelöchern zur Montage der Moduleinheiten 9, sowie aus einer oben befestigten horizontalen Abschlußplatte 12, welche primär zur oberen Abdeckung bzw. Abdichtung des montierten Brennstoffzellenmodules 10 im Behälter 16 dient.

Die notwendigen Brenngaskanäle 13 sind auf der Rückseite der Trägerplatte 11 derart montiert, daß diese hiermit ausreichend versteift wird. Eventuell sind noch weitere hier nicht dargestellte Versteifungsrippen notwendig. Die so befestigten Brenngaskanäle 13 (z. B. zwei Zuführungen und zwei Abführungen) ragen oben aus der horinzontalen Abschlußplatte 12 heraus, um hier die Weiterführung des Brenngases anzuschließen.

Die Montage der Moduleinheit 9 erfolgt beispielsweise mittels Schrauben oder Nieten. Zwischen der Trägerplatte 11 und dem Flansch 7 der Moduleinheit 9 befindet sich eine Dichtung 14, um auch hier ein Durchströmen von Luft zu vermeiden. Die Verbindung der Brenngasführung von den in die Trägerplatte 11 montierten Brenngaskanälen 13 zu den Moduleinheiten 9 erfolgt je Anschluß über ein speziell gekrümmtes Rohrstück 15, welches an die Trägerplatte 11 mittels Schrauben oder Schweißen und an die Moduleinheit 9 mit Hilfe einer Steckhülse angeschlossen ist. Die spezielle Form des Rohrestücks 15 wird dadurch bestimmt, daß die auftretenden Thermalverformungen zwischen Trägerplatte 11 und Moduleinheit 9 ausgeglichen werden, ohne daß die zulässige Spannung überschritten wird.

Die elektrische Verbindung der einzelnen Moduleinheiten 9 erfolgt mittels Verschweißen der an die Blöcke 1 angeschlossenen Stromanschlußlaschen 4. Die beiden Endpole dieser Verschaltung werden dann zu der oberen Abschlußplatte 12 geführt und hier die weitere Stromführung angeschlossen.

Der so integrierte Brennstoffzellenmodul 10 wird zur Inbetriebnahme in einen speziell geformten Behälter 16 geschoben, welcher aus beliebig vielen nach oben offenen und mittels Zwischenwände 22 begrenzten Kammern 24 besteht. Die einzelnen Kammern 24 werden durch das Einschieben der Brennstoffzellenmoduln 10 in zwei Räume getrennt, je einen für die Zuführung und Abführung der Luft. Die entsprechenden Flansche für Zuluftanschluß 17 und Abluftanschluß 18 sind seitlich am Behälter 16 angebracht. Zwei gegenüberliegende Schienen 23 dienen zur Führung beim Einschieben der Brennstoffzellenmoduln 10 und zur Abdichtung im Betrieb. Die Dichtung erfolgt über spezielle Dichtelemente (hier nicht gezeigt), die zwischen der vertikalen Trägerplatte 11 und der Schiene 19 liegen. Die Fixierung des in die Kammer 24 eingeschobenen Brennstoffzellenmoduls 10 erfolgt mittels Verschraubung der oberen horizontalen Abschlußplatte 12 mit dem Rand 21 der Kammer 24. Zur Abdichtung dieser Verschraubung ist eine weitere Dichtung vorgesehen.

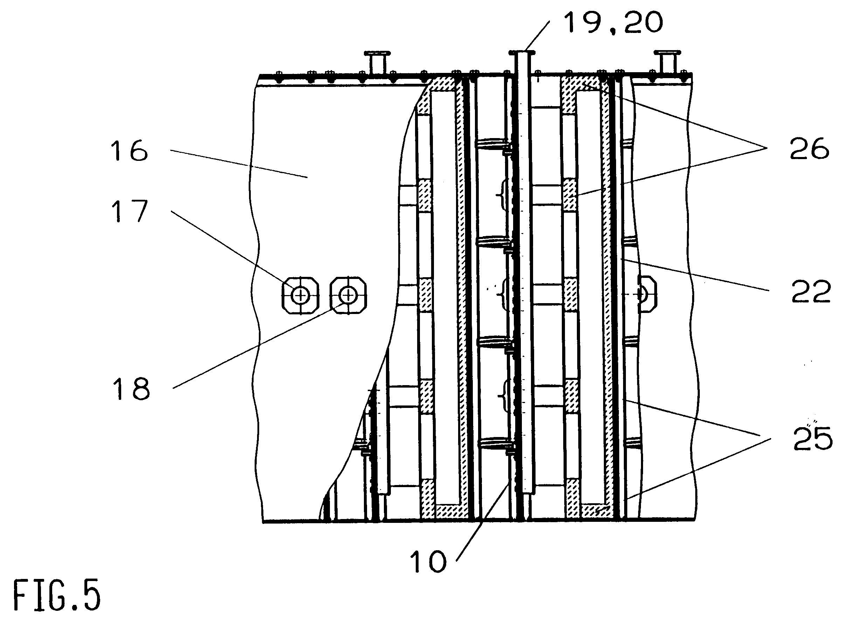

Die bevorzugte Anwendung von hochlegierten Stählen oder Ni-Legierungen für den Behälter 16 sowie für die Modulstrukturen setzt voraus, daß die Temperatur nicht über 850°C bis 900°C steigt. Da aber die Abluft nach dem Verlassen der Brennstoffzellen eine Temperatur von ca. 1000°C hat, ist somit eine Isolierung auf der Abgasseite notwendig. Fig. 5 zeigt die Isolierung 25 zur thermischen Entkopplung der Zwischenwand 22 und des Behälters 16, sowie die Isolierung 26 zur Entkopplung der Rückseite des Brennstoffzellenmoduls 10. Alternativ kann aber auch die Isolierung komplett oder nur teilweise entfallen, wenn die 800°C warme zugeführte Luft die entsprechenden Metallteile auf die zulässige Temperatur kühlt. Diese vorteilhafte Ausführung könnte die Anlagekosten erheblich reduzieren.

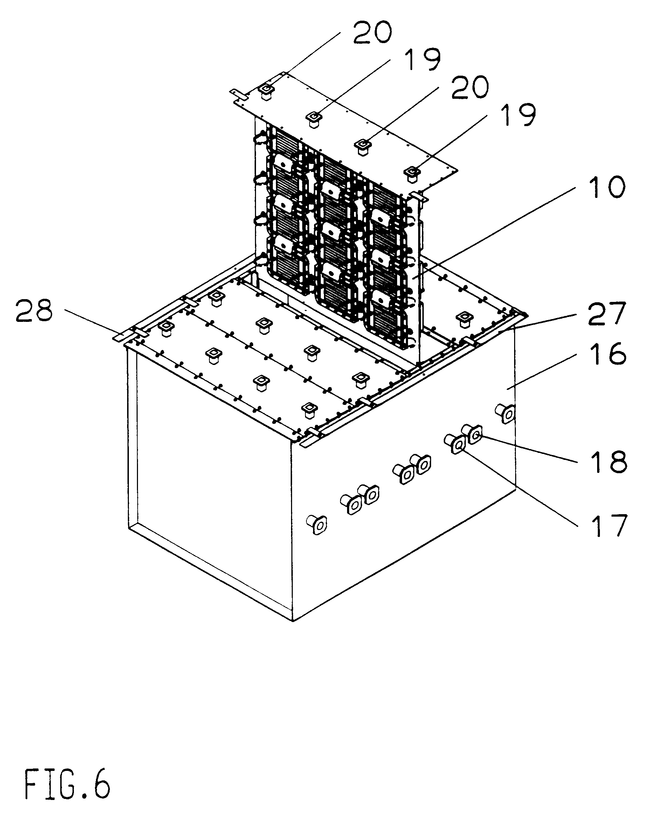

Fig. 6 zeigt die serielle Anordnung der Brennstoffzellen-Moduln mit den entsprechenden Anschlüssen für das Brenngas 19, 20 und für die Luft 17, 18 sowie die Stromschienen 27, 28 zur Weiterführung des erzeugten Stromes.

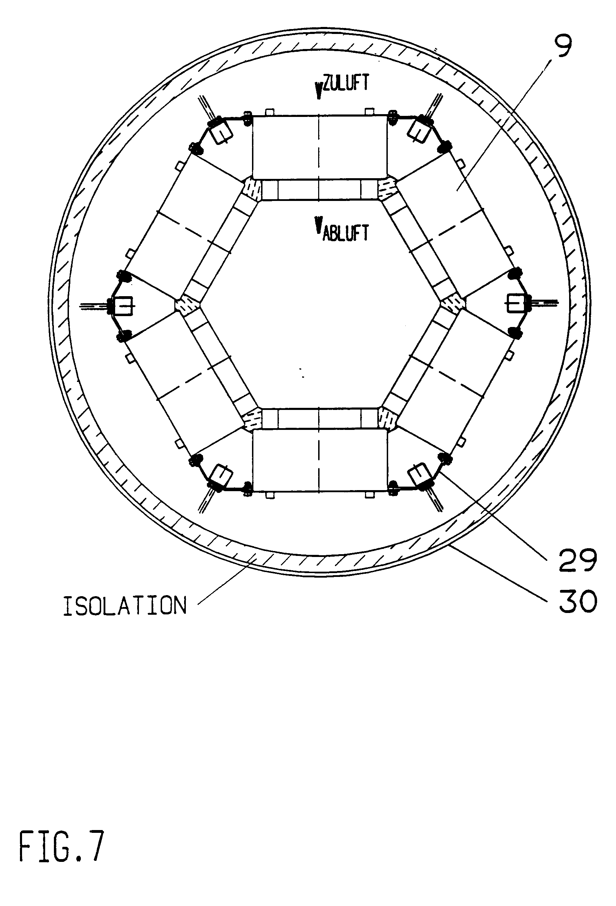

Eine vorteilhafte Ausgestaltung der Erfindung ist in Fig. 7 dargestellt. Hier wird eine Anzahl von ebenen Trägerplatten 11 mit montierten Moduleinheiten 9 zu einem Vieleck 29 zusammengefügt, so daß sich eine geschlossene Strukturschale bildet, die einen Innenraum umschließt. Mit Hilfe eines zylindrischen Druckbehälters 30, der das Vieleck umgibt, entstehen somit zwei in sich geschlossene Räume, ein äußerer für die Luftzuführung und ein innerer für die Abluft. Der Vorteil dieser Lösung liegt im Vergleich zur ebenen Modulgestaltung darin, daß das Gehäuse besser für hohe Drücke geeignet ist. Nachteilig ist der höhere Platzbedarf.

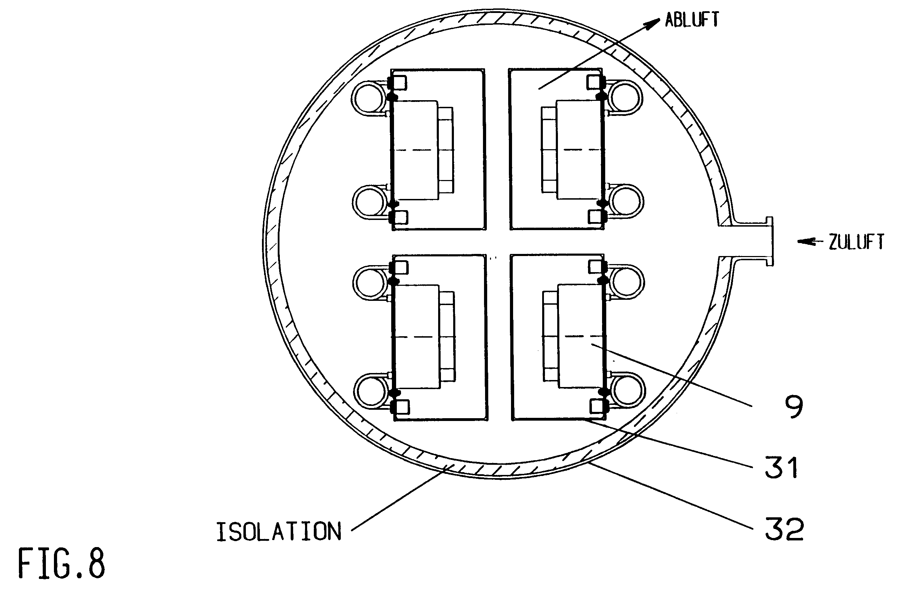

Eine weitere vorteilhafte Ausgestaltung der Erfindung ist in Fig. 8 dargestellt. Hier umschließt eine zu einer Röhre 31 geformte Trägerplatte eine Reihe übereinandermontierter Moduleinheiten 9, so daß die Abluft in dieser Röhre 31 abgeführt werden kann. Die Zuluft umströmt die Außenseite der Röhre 31, wodurch die Wandtemperatur auf einen Wert reduziert wird, bei der eine innere Isolierung der Röhre 31 nicht nötig ist. Je nach Zweckmäßigkeit können ein oder mehrere dieser Röhren 31 (z. B. vier wie in Fig. 8 gezeichnet) in einem zylindrischen Druckbehälter 32 zu größeren Einheiten verschaltet werden. Der Vorteil ist auch hier die Möglichkeit zum Aufbringen hoher Drücke sowie die Kühlung der Röhre 31 durch die kältere Zuluft.

### Bezugszeichenliste

- 1: Brennstoffzellenblock
- 2: Anschlußelement
- 3: Anschlußelement
- 4: Stromanschlußlasche
- 5: Isolierung
- 6: Gehäuse
- 7: Flansch
- 8: Flansch
- 9: Moduleinheit
- 10: Brennstoffzellenmodul
- 11: Trägerplatte
- 12: Abschlußplatte
- 13: Brenngaskanal
- 14: Dichtung
- 15: Rohrstück
- 16: Behälter
- 17: Luftanschluß
- 18: Abluftanschluß
- 19: Brenngasanschluß
- 20: Abgasanschluß
- 21: Rand
- 22: Zwischenwand
- 23: Schiene
- 24: Kammer
- 25: Isolierung
- 26: Isolierung
- 27: Stromschiene
- 28: Stromschiene
- 29: Vieleck
- 30: Zylindrischer Druckbehälter
- 31: Röhre
- 32: Zylindrischer Druckbehälter

## Patentansprüche

1. Bauweise für eine serielle Anordnung von Brennstoffzellenblöcken zur Stromerzeugung in Großanlagen, insbesondere aus Brennstoffzellen in Flachbauweise, die zu Blöcken beliebiger Anzahl zusammengefügt sind und die Blöcke weiterhin in beliebiger Anzahl zu Moduleinheiten seriell verschaltet sind, enthaltend die Brenngaszuführungen und Oxidationsgasführungen, die elektrischen Verbindungen sowie die entsprechenden Tragstrukturen, Dichtungselemente und Thermalisolierungen, **dadurch gekennzeichnet**, daß der Brennstoffzellenblock **1** mit gasdichten Anschlußelementen (**2, 3**) für das Brenngas und Abgas versehen ist und die Brenngaszuführung und Abgasrückführung über Metallrohre erfolgt und daß der Brennstoffzellenblock (**1**) für die Führung der Zuluft und Abluft keine Anschlußelemente benötigt, da hier aufgrund der räumlichen Trennung von Vorderseite und Rückseite der Brennstoffzellenblöcke (**1**), sowie aufgrund der Druckdifferenz zwischen den beiden Seiten, die Luft durch die entsprechenden Kanäle der einzelnen Brennstoffzellen strömt und die Trennung der Räume zwischen Vorderseite und Rückseite mittels einer Trägerplatte (**1 1**) erreicht wird, die gleichzeitig noch zur Fixierung der Brennstoffzellenblöcke (**1**) sowie der dazugehörenden Brenngasführungsrohre dient.

2. Bauweise nach Anspruch 1, **dadurch gekennzeichnet**, daß jeder einzelne Brennstoffzellenblock (**1**) über eine elastische Isolierung (**5**) in einem Gehäuse (**6**) derart gelagert und fixiert ist, daß auftretende Thermalverformungen zwischen Gehäuse (**6**) und Block (**1**) ausgeglichen werden und der luftseitige Gasdruck zur Rückseite der Brennglichen werden und der luftseitige Gasdruck zur Rückseite der Brennstoffzellen abgedichtet wird.

3. Bauweise nach Anspruch 1 und 2, **dadurch gekennzeichnet**, daß der Block (**1**) thermisch isoliert ist.

4. Bauweise nach Anspruch 1 und 2, **dadurch gekennzeichnet**, daß das Gehäuse (**6**) und die Trägerplatte (**1 1**) aus keramischen Werkstoffen oder und/oder metallischen Werkstoffen aufgebaut ist.

5. Bauweise nach Anspruch 1 und 2, **dadurch gekennzeichnet**, daß die Zuluft zur Kühlung von metallischen Komponenten und Tragstrukturen eingesetzt wird.

6. Bauweise nach Anspruch 1 und 2, **dadurch gekennzeichnet**, daß die Brennstoffzellen als Elektrolysezellen betrieben werden können.

7. Bauweise nach Anspruch 1 und 2, **dadurch gekennzeichnet**, daß die Brennstoffzellenblöcke elektrisch seriell oder parallel verschaltbar sind.

8. Bauweise nach Anspruch 1 und 2, **dadurch gekennzeichnet**, daß mehrere Brennstoffzellenblöcke (**1**) direkt aufeinandergestapelt sind.

9. Bauweise nach Anspruch 1 und 2, **dadurch gekennzeichnet**, daß dieTrägerplatte (**1 1**) als ebene Platte ausgeführt ist und in einem Behälter (**1 6**) integriert ist, der ebenfalls aus ebenen Strukturelementen besteht.

10. Bauweise nach Anspruch 1 und 2, **dadurch gekennzeichnet**, daß die Trägerplatte (**1 1**) zu einem Vieleck (**29**, **31**) oder Zylinder geformt ist und von einem zylindrischen Behälter (**30**, **32**) umschlossen ist.

11. Bauweise nach Anspruch 1 und 2, **dadurch gekennzeichnet**, daß die Behälter (**16**, **30, 32**) als Druckbehälter ausgelegt sind.

12. Bauweise nach Anspruch 1 und 2, **dadurch gekennzeichnet**, daß die Behälter (**16**, **30, 32**) in Druckbehälter integriert werden.

13. Bauweise nach Anspruch 1 und 2, **dadurch gekennzeichnet**, daß mehrere Behälter (**16**, **30, 32**) mit integrierten Brennstoffzellenmodulen (**1 0**) zu größeren Leistungseinheiten und Kraftwerksanlagen angeordnet und verschaltet werden.

14. Bauweise nach Anspruch 1 und 2, **dadurch gekennzeichnet**, daß eine teilweise oder vollständige Vorreformierung der Brenngase in der metallischen Behälterkonstruktion erfolgt und die benötigte Reformierungswärme der Abluft entnommen wird.
